# EUROPEAN PATENT SPECIFICATION

(11) **EP 4 145 890 B1**
(45) Date of publication and mention of the grant of the patent: **29.07.2026**
(21) Application number: 21194642.1
(22) Date of filing: 02.09.2021
(51) Int. Cl.: H04W 12/02, H04W 24/06, H04W 88/06, H04L 9/40, H04W 24/10

(54) **MONITORING A WIRELESS CAMPUS AREA NETWORK**
ÜBERWACHUNG EINES DRAHTLOSEN CAMPUS-NETZWERKS
SURVEILLANCE D'UN RÉSEAU DE ZONE DE CAMPUS SANS FIL

(43) Date of publication of application: 08.03.2023
(73) Proprietor: Vodafone GmbH, 40549 Düsseldorf (DE)
(72) Inventor: OEZBEK, Nesimi, 50259 Pulheim (DE); BARON, Paul Maximilian, 47057 Duisburg (DE)
(74) Representative: Weisbrodt, Bernd

(56) References cited:
- WO-A1-2017/165059
- US-A1- 2009 082 009
- US-A1- 2018 249 395

## Description

The present application proposes a device and a method for monitoring a wireless Campus Area Network.

At present, a cost efficient and flexible solution that allows to monitor closed or isolated Campus Area Networks (CANs), particularly 5G Campus Networks, is not existing. Using a simple probing solution for monitoring purposes is disadvantageous, since monitoring results shall be provided without delay, thus requiring an additional backchannel. In addition to that, monitoring results need to be protected from unauthorized access.

Existing solutions require an active internet connection via WLAN or, alternatively, a SIM card that is able to be public and CAN-related at the same time. However, such solutions are disadvantageous for the monitoring of isolated CANs, e.g. isolated 5^{th} generation standalone (5G-SA) networks, if a WLAN connection is not given. Corresponding technical solutions for this particular network architecture are not existing. Moreover, using only one IP-based network at a time is the usual standard procedure for connected devices. This is the case since using more than one network at a time leads to unwelcome side effects such as overlapping IP ranges, overlapping subnet masks, confusion in which network to answer to, etc.

Depending on how the gateway and the default routes are set, answers are sent out via the wrong network interface. Due to those overwhelming issues, it is the standard procedure to use only one network at a time and disable any potential other network when it is not used. This is especially true for cellular networks. Devices with the ability to use multiple different operators, e.g. dual-sim smartphones, also only allow for one connection at a time.

WO 2017/165059 A1 discloses a method for enabling network probing with a communication device based on the communication device sending a probe via a first network connection and receiving the probe via a second network connection. By leveraging a capability of a communication device to establish two network connections at the same time, a single communication device acts as both a probing client and a probing server.

US 2009/0082009 A1 discloses a portable wireless site qualifier device comprising a self-updating and self-configuring portable measuring device that analyzes, tests, and measures quality of service on all available wireless networks and immediately displays an optimal choice when choosing between multiple wireless data providers.

US 2018/0249395 A1 discloses a method for updating at least two tables and a method for transmission of a pheromone signal, wherein the pheromone signal carries a series of pheromone messages transmitted at a constant frequency to a first terminal from a second terminal across each of the access networks of a plurality of access networks.

In view of this, the technical problem can be seen to be that of providing a more flexible solution that allows to easily and securely monitor CANs in a cost efficient manner.

In order to solve this problem, a device for monitoring a wireless CAN is provided as defined in the appended claims.

Hence, the claimed solution uses a first modem which acts as a built-in cellular modem, allowing to connect with special parameters on each test iteration, e.g. using different APNs or accessing the network as a different user. Further, using a second modem, a static connection to backend services provided by a server can be established. This approach allows maintaining both network connections without crosstalk. This is particularly advantageous since most CANs, which need to be monitored, are isolated and a SIM card only works for the CAN but not for a regular mobile network that is not isolated.

With this approach, it is possible to achieve massive cost savings and a very high scalability since the claimed solution can be modified slightly and subsequently used for different kinds of monitoring needs. Furthermore, a massive flexibility is given because a testing suite that may be located on the device can be tailored to fit different customers' needs, e.g. by disabling or adding certain tests. Further, a remote connection to the device can be established in order to perform specific tests. The claimed solution is particularly simple since only providing a corresponding subscriber identification, e.g. by means of a SIM card, of the respective CAN is required to achieve an end-to-end service/performance monitoring.

Using two cellular networks simultaneously provides great advantages such as using the device for monitoring the wireless CAN remotely, while said device is still connected to the CAN. It is further possible to extract data from the device in real time without waiting for a switch between two different networks that may take up to several minutes. Therefore, the time to monitor the CAN effectively can be extended and actions can accordingly be taken based on performance results. Further, the claimed solution is independent from using an internet connection granted by the customer operating the isolated CAN, since a cellular connection is used for backend monitoring instead.

According to an embodiment, the CAN and the other wireless network are cellular networks according to at least one of a 2G, 3G, 4G and 5G communication standard.

Furthermore, the second cellular network modem may be connected to the device using an Ethernet connection or a Universal Serial Bus, USB, connection. This is particularly advantageous since the second cellular network modem can be controlled independent from the device itself.

In a preferred embodiment, the device is connected to means that are configured to, based on a command received from the server, restart at least one of the device, the first cellular network modem and the second cellular network modem. This may be done using a smart energy outlet for each of the respective modem or the device.

The secure connection is provided by means of a non-public Access Point Name, APN. Using such connection is advantageous for protection of data collected in the CAN, which leaves the same for reporting to the server.

According to another preferred embodiment, the device is further configured to: receive, from the server, a command for performing a monitoring test in the CAN using the first cellular network modem; perform the monitoring test; and at least temporarily store a result of the monitoring test. This allows to not only perform a regular monitoring at certain time intervals, but also an on-demand monitoring in case of network issues in the CAN.

Preferably, the monitoring test comprises at least one of a connectivity test, a latency test, a jitter test and a network throughput test. According to a further preferred embodiment, the device is further configured to provide, upon request of the server, the result of the monitoring test to the server.

Moreover, the device may be further configured to receive, from the server, a command for performing a maintenance operation. Hence, it is not required for a technician to perform an on-site visit in order to configure monitoring tests and the like.

Furthermore, the connection established to the CAN is independent from the secure connection established to the other wireless network. Hence, no crosstalk between the connection towards the CAN and the connection towards the other wireless network is possible.

According to another aspect of the present invention, a method performed by a device for monitoring a wireless Campus Area Network (CAN) is provided as defined in the appended claims.

The CAN and the other wireless network may be cellular networks according to at least one of a 2G, 3G, 4G and 5G communication standard.

Further, the monitoring test may comprise at least one of a connectivity test, a latency test, a jitter test and a network throughput test.

The claimed method may further comprise: providing, upon request of the server, the result of the monitoring test to the server.

As indicated above, the connection established to the CAN is independent from the secure connection established to the other wireless network.

Further details, features and advantages of the invention are explained in more detail below with reference to the embodiments shown in the figures of the drawings.

Therein:
- Fig. 1: shows an embodiment of a device for monitoring a wireless Campus Area Network;
- Fig. 2: shows an embodiment of a method for monitoring a wireless Campus Area Network; and
- Fig. 3: shows an embodiment of different actions that can be performed by the device for monitoring a wireless Campus Area Network.

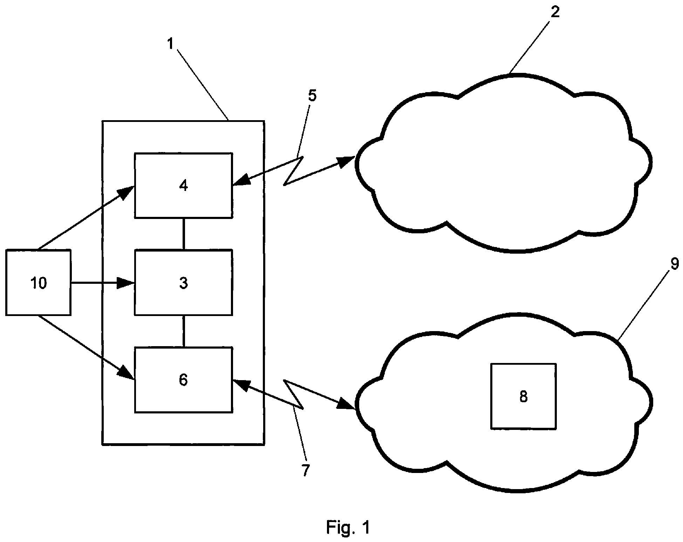

Fig. 1 shows an embodiment of a device 1 for monitoring a wireless Campus Area Network (CAN) 2. The device 2 comprises a first cellular network modem 4 that is operably connected to a processor 3 of the device 2 and configured to establish a connection 5 to the CAN 2. The first cellular network modem 4 is, for example, a 5G shield that acts as an internal network interface of the device 1. In the present case, the CAN 2 is a closed corporate network, which is realized using the 5G communication standard.

The processor 3 of the device 1 is further operably connected to a second cellular network modem 6. By means of said second cellular network modem 6, a secure connection 7 to another wireless network 9, particularly comprising a server 8, can be established. The second cellular network modem 6 may be an external 5G router, which is operably connected to the device 1. In this case, the second cellular network modem 6 may be connected to the device 1 using an Ethernet connection or a USB connection. It is apparent from Fig. 1 that the other wireless network 9 is different from the CAN 2 and that said networks are not directly connected to each other.

Hence, the connection 5 established to the CAN 2, which shall be monitored, is independent from the secure connection 7 established to the other wireless network 9. Further, the server 8 in the other wireless network 9 may also be represented by a plurality of servers, e.g. a control server that may perform a control of the device 1 and an analytics server that may store monitoring results. Said server(s) may be implemented by hardware and/or software.

Furthermore, Fig. 1 shows means 10 that are configured to, based on a command received from the server 8, restart at least one of the device 1, the first cellular network modem 4 and the second cellular network modem 6. Particularly for restarting the whole device 1 or the second cellular network modem 6 when implemented as an external 5G router, said means 10 may be a smart power outlet that is remotely controlled, particularly by a control server.

In order to monitor the CAN 2, the device 1 performs monitoring tests in regular intervals, e.g. by monitoring basic parameters such as latency, jitter, network throughput to determine a service quality. However, results of such tests are not ultimately stored on the device 1 itself but are rather fetched by the server 8 and deleted right after on the device 1. For this purpose, the device 1 is further configured to provide, upon request of the server 8, the result of the monitoring test to the server 8.

In addition to that, it is also foreseen that the device 1 may receive, from the server 8, a command for performing a monitoring test in the CAN 2 using the first cellular network modem 4, perform the monitoring test, and at least temporarily store a result of the monitoring test. In case of such on-demand tests, the result of the monitoring test may subsequently be directly provided to the server 8.

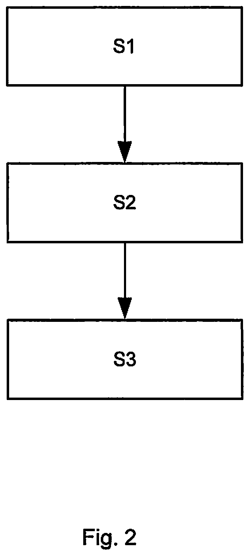

Fig. 2 shows an embodiment of a method for monitoring a wireless Campus Area Network (CAN) 2. In a first method step S1, the device 1 establishes, using a first cellular network modem 4 of the device 1, a connection 5 to the CAN 2. Subsequently, in a second method step S2, the device 1 also establishes, using a second cellular network modem 6 of the device 1, a secure connection 7 to a server 8 arranged in another wireless network 9. Hence, a connection 5 for performing monitoring tests in the CAN 2 and a secure connection 7 for providing corresponding test results to a server 8 are existing at the same time.

Subsequently, in a third method step S3, the device 1 performs, using the first cellular network modem 4, a monitoring test in the CAN 2. The monitoring test may be one of a connectivity test, a latency test, a jitter test and a network throughput test.

Finally, after method step S3, the device 1 may provide, upon request of the server 8, the result of the monitoring test to the server 8.

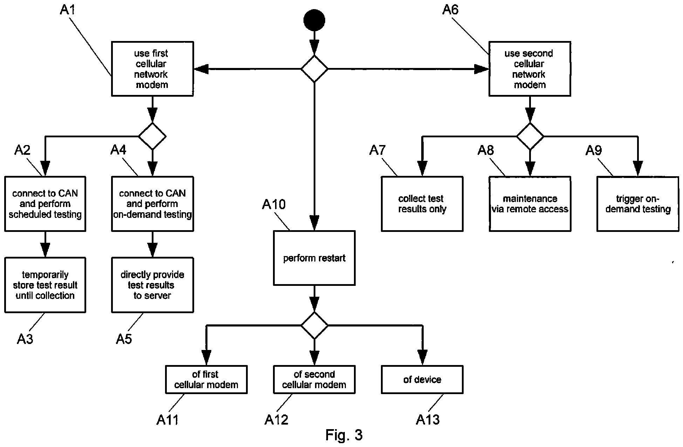

Fig. 3 shows an embodiment of different actions that may be performed by the device 1 for monitoring a wireless Campus Area Network (CAN) 2.

In detail, the device 1 may use its first cellular network modem 4 as indicated in action A1 and/or its second cellular network modem as indicated in action A6. As shown in action A2, the device 1 may connect to the CAN 2 and perform a scheduled monitoring/testing, e.g. in regular intervals. Subsequently, the corresponding results are temporarily stored until they are fetched/collected by the server 8, see action A3. Alternatively, the device may connect to the CAN 2 and perform an on-demand testing as indicated in action A4. In this case, the device 1 may directly provide test results to the server 8 as shown in action A5.

Using the second cellular modem 6 of the device 1, three different actions A7, A8 and A9 may be performed. In case the device 1 performed a monitoring/testing in regular intervals, the second cellular modem 6 may be used to collect, by the server 8, test results only as shown in action A7. According to action 9, the second cellular modem 6 of the device 1 may be used to perform a maintenance of the device 1 via remote access, e.g. for configuring monitoring intervals and corresponding parameters for performing a connectivity test, a latency test, a jitter test, a network throughput test and the like.

Depending on the network architecture employed by the CAN 2, testing multiple APNs may also be possible. Further, according to action A9, the second cellular modem 6 of the device 1 may be used to trigger, based on a command received from the server 8, an on-demand testing. In this case, the corresponding tests are performed by the first cellular modem 4 as indicated in action A4.

Besides the actions that have been described for the first cellular network modem 4 and the second cellular network modem 6, wherein the device 1 is instructed to perform said actions through the second cellular modem 6. According to action A10, a restart command may be received from the server 8. The restart may relate to restarting the first cellular modem 4 (action A11), the second cellular modem 6 (action A12), or the whole device 1 (action A13). Since the second cellular modem 6 may be implemented as an external 5G router, the means 10 for restarting may be advantageously a smart power outlet that is remotely controlled, particularly by a corresponding control server.

The embodiments shown in the figures of the drawing and the embodiments explained in connection therewith serve only to explain the invention and are not limiting for the same.

### Reference signs:

- 1: Device
- 2: Campus Area Network
- 3: Processor
- 4: First cellular network modem
- 5: Connection
- 6: Second cellular network modem
- 7: Secure connection
- 8: Server
- 9: Another wireless network
- 10: Restarting means

## Claims

1. Device (1) for monitoring a wireless Campus Area Network, CAN (2), the device (1) comprising:
a processor (3);
a first cellular network modem (4) operably connected to the processor (3) and configured to establish a connection (5) to the CAN (2); and
a second cellular network modem (6) operably connected to the processor (3) and configured to establish a secure connection (7) to a server (8) arranged in another wireless network (9), which is different from the CAN (2),
the first cellular network modem (4) configured to perform a monitoring test in the CAN (2),
wherein the secure connection (7) is provided by means of a non-public Access Point Name, APN.

2. The device (1) according to claim 1, wherein the CAN (2) and the other wireless network (9) are cellular networks according to at least one of a 2G, 3G, 4G and 5G communication standard.

3. The device (1) according to claim 1 or claim 2, wherein the second cellular network modem (6) is connected to the device (1) using an Ethernet connection or a Universal Serial Bus, USB, connection.

4. The device (1) according to any one of claims 1 to 3, wherein the device (1) is connected to means (10) configured to, based on a command received from the server (8), restart at least one of the device (1), the first cellular network modem (4) and the second cellular network modem (6).

5. The device (1) according to any one of claims 1 to 4, wherein the device (1) is further configured to: receive, from the server (8), a command for performing a monitoring test in the CAN (2) using the first cellular network modem (4); perform the monitoring test; and at least temporarily store a result of the monitoring test.

6. The device (1) according to claim 5, wherein the monitoring test comprises at least one of a connectivity test, a latency test, a jitter test and a network throughput test.

7. The device (1) according to claim 5 or claim 6, wherein the device (1) is further configured to provide, upon request of the server (8), the result of the monitoring test to the server (8).

8. The device (1) according to any one of claims 1 to 7, wherein the device (1) is further configured to receive, from the server (8), a command for performing a maintenance operation.

9. The device (1) according to any one of claims 1 to 8, wherein the connection (5) established to the CAN (2) is independent from the secure connection (7) established to the other wireless network (9).

10. Method performed by a device for monitoring a wireless Campus Area Network, CAN (2), the method comprising:
establishing (S1), using a first cellular network modem (4) of a device (1), a connection (5) to the CAN (2);
establishing (S2), using a second cellular network modem (6) of the device (1), a secure connection (7) to a server (8) arranged in another wireless network (9), which is different from the CAN (2); and
performing (S3), using the first cellular network modem (4), a monitoring test in the CAN (2),
wherein the secure connection (7) is provided by means of a non-public Access Point Name, APN.

11. The method according to claim 10, wherein the CAN (2) and the other wireless network (9) are cellular networks according to at least one of a 2G, 3G, 4G and 5G communication standard.

12. The method according to claim 10 or claim 11, wherein the monitoring test comprises at least one of a connectivity test, a latency test, a jitter test and a network throughput test.

13. The method according to any one of claims 10 to 12, further comprising: providing, upon request of the server (8), the result of the monitoring test to the server (8).

14. The method according to any one of claims 10 to 13, wherein the connection (5) established to the CAN (2) is independent from the secure connection (7) established to the other wireless network (9).

## Patentansprüche

1. Vorrichtung (1) zur Überwachung eines drahtlosen Campus-Netzwerks (CAN) (2), wobei die Vorrichtung (1) umfasst:
einen Prozessor (3);
ein erstes Mobilfunkmodem (4), das funktionsfähig mit dem Prozessor (3) verbunden und so konfiguriert ist, dass es eine Verbindung (5) zum CAN (2) herstellt; und
ein zweites Mobilfunkmodem (6), das funktionsfähig mit dem Prozessor (3) verbunden und so konfiguriert ist, dass es eine sichere Verbindung (7) zu einem Server (8) herstellt, der in einem anderen drahtlosen Netzwerk (9) angeordnet ist, das sich vom CAN (2) unterscheidet,
wobei das erste Mobilfunkmodem (4) so konfiguriert ist, dass es einen Überwachungstest im CAN (2) durchführt,
wobei die sichere Verbindung (7) mittels eines nicht-öffentlichen Access Point Name (APN) bereitgestellt wird.

2. Vorrichtung (1) nach Anspruch 1, wobei das CAN (2) und das andere drahtlose Netzwerk (9) Mobilfunknetze gemäß mindestens einem der Kommunikationsstandards 2G, 3G, 4G und 5G sind.

3. Vorrichtung (1) nach Anspruch 1 oder Anspruch 2, wobei das zweite Mobilfunkmodem (6) über eine Ethernet-Verbindung oder eine USB-Verbindung (Universal Serial Bus) mit der Vorrichtung (1) verbunden ist.

4. Vorrichtung (1) nach einem der Ansprüche 1 bis 3, wobei die Vorrichtung (1) mit einer Einrichtung (10) verbunden ist, die so konfiguriert ist, dass sie auf der Grundlage eines vom Server (8) empfangenen Befehls mindestens eines der Elemente - die Vorrichtung (1), das erste Mobilfunknetz-Modem (4) und das zweite Mobilfunknetz-Modem (6) - neu startet.

5. Vorrichtung (1) nach einem der Ansprüche 1 bis 4, wobei die Vorrichtung (1) ferner dazu ausgelegt ist: vom Server (8) einen Befehl zum Durchführen eines Überwachungstests im CAN (2) unter Verwendung des ersten Mobilfunkmodems (4) zu empfangen; den Überwachungstest durchzuführen; und ein Ergebnis des Überwachungstests zumindest vorübergehend zu speichern.

6. Vorrichtung (1) nach Anspruch 5, wobei der Überwachungstest mindestens einen der folgenden Tests umfasst: einen Konnektivitätstest, einen Latenztest, einen Jitter-Test und einen Netzwerkdurchsatztest.

7. Vorrichtung (1) nach Anspruch 5 oder Anspruch 6, wobei die Vorrichtung (1) ferner so konfiguriert ist, dass sie auf Anfrage des Servers (8) das Ergebnis des Überwachungstests an den Server (8) übermittelt.

8. Vorrichtung (1) nach einem der Ansprüche 1 bis 7, wobei die Vorrichtung (1) ferner so konfiguriert ist, dass sie vom Server (8) einen Befehl zur Durchführung eines Wartungsvorgangs empfängt.

9. Vorrichtung (1) nach einem der Ansprüche 1 bis 8, wobei die zum CAN (2) hergestellte Verbindung (5) unabhängig von der zum anderen drahtlosen Netzwerk (9) hergestellten sicheren Verbindung (7) ist.

10. Verfahren, das von einer Vorrichtung zur Überwachung eines drahtlosen Campus-Area-Netzwerks (CAN) (2) ausgeführt wird, wobei das Verfahren umfasst:
Herstellen (S1) einer Verbindung (5) zum CAN (2) unter Verwendung eines ersten Mobilfunkmodems (4) eines Geräts (1);
Herstellen (S2) einer sicheren Verbindung (7) zu einem Server (8), der in einem anderen drahtlosen Netzwerk (9) angeordnet ist, das sich vom CAN (2) unterscheidet, unter Verwendung eines zweiten Mobilfunkmodems (6) der Vorrichtung (1); und
Durchführung (S3) eines Überwachungstests im CAN (2) unter Verwendung des ersten Mobilfunkmodems (4),
wobei die sichere Verbindung (7) mittels eines nicht-öffentlichen Access Point Name (APN) bereitgestellt wird.

11. Verfahren nach Anspruch 10, wobei das CAN (2) und das andere drahtlose Netzwerk (9) Mobilfunknetze gemäß mindestens einem der Kommunikationsstandards 2G, 3G, 4G und 5G sind.

12. Verfahren nach Anspruch 10 oder Anspruch 11, wobei der Überwachungstest mindestens einen der folgenden Tests umfasst: einen Konnektivitätstest, einen Latenztest, einen Jitter-Test und einen Netzwerkdurchsatztest.

13. Verfahren nach einem der Ansprüche 10 bis 12, das ferner umfasst: Bereitstellen des Ergebnisses des Überwachungstests an den Server (8) auf dessen Anfrage hin.

14. Verfahren nach einem der Ansprüche 10 bis 13, wobei die zum CAN (2) hergestellte Verbindung (5) unabhängig von der zum anderen drahtlosen Netzwerk (9) hergestellten sicheren Verbindung (7) ist.

## Revendications

1. Dispositif (1) destiné à surveiller un réseau de campus sans fil, CAN (2), le dispositif (1) comprenant:
un processeur (3);
un premier modem de réseau cellulaire (4) connecté de manière opérationnelle au processeur (3) et configuré pour établir une connexion (5) avec le CAN (2); et
un deuxième modem de réseau cellulaire (6) connecté de manière opérationnelle au processeur (3) et configuré pour établir une connexion sécurisée (7) avec un serveur (8) situé dans un autre réseau sans fil (9), différent du CAN (2),
le premier modem de réseau cellulaire (4) étant configuré pour effectuer un test de surveillance au sein du CAN (2),
dans lequel la connexion sécurisée (7) est établie au moyen d'un nom de point d'accès (APN) non public.

2. Dispositif (1) selon la revendication 1, dans lequel le CAN (2) et l'autre réseau sans fil (9) sont des réseaux cellulaires conformes à au moins l'une des normes de communication 2G, 3G, 4G et 5G.

3. Dispositif (1) selon la revendication 1 ou la revendication 2, dans lequel le deuxième modem de réseau cellulaire (6) est connecté au dispositif (1) à l'aide d'une connexion Ethernet ou d'une connexion USB (Universal Serial Bus).

4. Dispositif (1) selon l'une quelconque des revendications 1 à 3, dans lequel le dispositif (1) est connecté à des moyens (10) configurés pour, sur la base d'une commande reçue du serveur (8), redémarrer au moins l'un parmi le dispositif (1), le premier modem de réseau cellulaire (4) et le deuxième modem de réseau cellulaire (6).

5. Dispositif (1) selon l'une quelconque des revendications 1 à 4, dans lequel le dispositif (1) est en outre configuré pour: recevoir, depuis le serveur (8), une commande visant à effectuer un test de surveillance dans le réseau CAN (2) à l'aide du premier modem de réseau cellulaire (4); effectuer le test de surveillance; et stocker, au moins temporairement, un résultat du test de surveillance.

6. Dispositif (1) selon la revendication 5, dans lequel le test de surveillance comprend au moins l'un parmi un test de connectivité, un test de latence, un test de gigue et un test de débit réseau.

7. Dispositif (1) selon la revendication 5 ou la revendication 6, dans lequel le dispositif (1) est en outre configuré pour fournir, à la demande du serveur (8), le résultat du test de surveillance au serveur (8).

8. Dispositif (1) selon l'une quelconque des revendications 1 à 7, dans lequel le dispositif (1) est en outre configuré pour recevoir, du serveur (8), une commande destinée à effectuer une opération de maintenance.

9. Dispositif (1) selon l'une quelconque des revendications 1 à 8, dans lequel la connexion (5) établie vers le réseau CAN (2) est indépendante de la connexion sécurisée (7) établie vers l'autre réseau sans fil (9).

10. Procédé mis en œuvre par un dispositif pour surveiller un réseau de campus sans fil, CAN (2), le procédé comprenant:
l'établissement (S1), à l'aide d'un premier modem de réseau cellulaire (4) d'un dispositif (1), d'une connexion (5) vers le CAN (2);
l'établissement (S2), à l'aide d'un deuxième modem de réseau cellulaire (6) du dispositif (1), d'une connexion sécurisée (7) vers un serveur (8) situé dans un autre réseau sans fil (9), qui est différent du CAN (2); et
la réalisation (S3), à l'aide du premier modem de réseau cellulaire (4), d'un test de surveillance au sein du CAN (2),
dans lequel la connexion sécurisée (7) est établie au moyen d'un nom de point d'accès (APN) non public.

11. Procédé selon la revendication 10, dans lequel le réseau CAN (2) et l'autre réseau sans fil (9) sont des réseaux cellulaires conformes à au moins l'une des normes de communication 2G, 3G, 4G et 5G.

12. Procédé selon la revendication 10 ou la revendication 11, dans lequel le test de surveillance comprend au moins l'un parmi un test de connectivité, un test de latence, un test de gigue et un test de débit réseau.

13. Procédé selon l'une quelconque des revendications 10 à 12, comprenant en outre : la fourniture, à la demande du serveur (8), du résultat du test de surveillance au serveur (8).

14. Procédé selon l'une quelconque des revendications 10 à 13, dans lequel la connexion (5) établie vers le réseau CAN (2) est indépendante de la connexion sécurisée (7) établie vers l'autre réseau sans fil (9).
